(19) Europäisches Patentamt
European Patent Office
Office européen des brevets

(11) **EP 1 705 925 A2**

(12) **EUROPEAN PATENT APPLICATION**

(43) Date of publication:
**27.09.2006 Bulletin 2006/39**

(51) Int Cl.:
*H04N 7/36* (2006.01)    *H04N 7/26* (2006.01)
*H04N 7/50* (2006.01)

(21) Application number: **05102419.8**

(22) Date of filing: **24.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **23.03.2005 JP 2005084775**

(71) Applicant: **KABUSHIKI KAISHA TOSHIBA
Tokyo 105-8001 (JP)**

(72) Inventor: **Mori, Hirofumi
Thoshiba Corporation
Minato-ku
105-8001, Tokyo (JP)**

(74) Representative: **Henkel, Feiler & Hänzel
Patentanwälte
Maximiliansplatz 21
80333 München (DE)**

(54) **Motion compensation using scene change detection**

(57) In a picture encoding apparatus which can reduce an amount of computation in encoding, frames (FR0, ... FR5) are inputted in time series, and a scene change is detected. A scene number for identifying an identical or similar scene is assigned to each of the frames (FR0, ..., FRS), and when a new scene appears, a new scene number (scene No. 0, No. 1) is assigned. Picture frames (FR0, ..., FR5) having the same scene number (scene No. 0, No. 1) assigned thereto, the frames (FR0, ..., FR5) being continuously inputted, are encoded in an inter-prediction mode. When a frame (FR0, ..., FR5) is inputted after a scene change, a search is made for a reference picture in accordance with a scene number (scene No. 0, No. 1) - If no reference picture exists, encoding is carried out in an infra-prediction mode- If a reference picture exists, the frame (FR0, ..., FR5) is encoded in any one of the in-.ra-oredicrion mode and the inier-prediction mode so as to minimize an encoding COST.

FIG. 2

## Description

The present invention relates to a moving picture encoding apparatus for encoding a moving picture, and more particularly, to a moving picture encoding apparatus capable of reducing an amount of processing pertaining to motion estimation in moving picture encoding.

In recent years, a technique of encoding and decoding a moving picture has been advanced more remarkably. This is because an amount of information is increased with a higher picture quality of a moving picture and also because there has been a growing demand for developing a wired or wireless network, thereby transmitting picture information through these networks.

In the technique of encoding and decoding a moving picture, there is a demand for high compression efficiency, high picture quality during decoding, and good transmission efficiency. The technique of encoding and decoding a moving picture which meets these demands includes a technique referred to as H. 264/AVC (Advanced video coding) recognized as an international standard (hereinafter, simply referred to "H264"). This technique of encoding and decoding a moving picture is disclosed in, for example, IEEE TRANSACTION ON CIRCUIT AND SYSTEMS FOR VIDEO TECHNOLOGY, VOL. 13, No. 7, 2003, "Overview of the H. 264/AVC Video Coding Standard", Thomas Wiegand.

In general, in a moving picture encoding apparatus for encoding a video signal, an inter-prediction is carried out based on a reference frame or reference frames to compress and encode picture data. In the H. 264 standard which is one of moving picture encoding standards, inter-prediction can be carried out from a plurality of reference frames. In such a moving picture encoding apparatus configured in accordance with the H. 264 standard, an enormous amount of computation is required to carry out motion estimation from all the reference frames.

In a conventional moving picture encoding apparatus that is compliant with the H. 264, assuming that a frame in which a 1-schene change has occurred is defined as an instantaneous decoding refresh (IDR), a reference frame is initialized, so that an amount of calculation can be reduced. However, there is a problem that a frame earlier than the IDR picture cannot be referenced in a sequence including such a flash that a dark scene and a bright scene are repeated or a sequence which includes a video picture in which the same scene is repeated. Thus, all the scenes corresponding to the scene changes are defined as the IDR pictures so that an encoding efficiency is degraded.

In addition, in the H. 264 standard, although it is necessary to periodically insert IDR pictures because an intra-macro block (Intra MB) is not inserted unlike MPEG-4, it may not always necessary to set a scene corresponding to the scene change to IDR.

According to the above described situation, in any case, there is a demand for a moving picture encoding apparatus capable of reducing an amount of processing pertaining motion estimation, in particular, motion estimation in a frame produced after a scene change.

An object of the invention is to provide a moving picture encoding apparatus capable of reducing an amount of computation in a moving picture encoding.

According to an aspect of the present invention, there is provided a moving picture encoding apparatus for encoding a moving picture comprising:

a scene change detecting section configured to compare successive frames of the moving picture to detect a scene change, inputted in time series, and assigns a scene identifier for identifying an identical or similar scene to each frame in response to detection of the scene change;
a storage section configured to store the frame which belongs to the each scene as a reference frame specified by the scene identifier;
a setting section configured to set any one of an infra-prediction mode and an inter-prediction mode; and
an encoding section configured to encode the frame inputted between the scene changes in the inter-prediction mode and to search a reference frame by a scene identifier inputted after the scene change, the encoding section encoding the frame inputted after the scene change in the infra-prediction mode if there is no reference picture specified by the scene identifier, and encoding section encoding the frame inputted after the scene change in one of the inter-prediction mode and intra-prediction mode inputted so as to minimize an encoding cost if there is a reference picture specified by the scene identifier.

According to another aspect of the present invention, there is provided a moving picture encoding apparatus for encoding a moving picture comprising:

a scene change detecting section configured to compare successive frames of the moving picture to detect a scene change, which have frame numbers and are inputted in time series, and assign a scene number for identifying an identical or similar scene to each frame in response to detection of the scene change, wherein, the scene change detecting section assigns a scene number identical to the scene if an identical or similar scene exists in a predetermined range before the scene change, and the scene change detecting section assigns a new scene number if no identical or similar scene exists in a predetermined range before the scene change;
a storage section configured to store a frame which belongs to the each scene as a reference frame specified by the scene number and frame number;
a setting section configured to set any one of an infra-prediction mode and an inter-prediction mode; and
an encoding section configured to encode frames to which the identical scene numbers are assigned, the frames being continuously inputted, in the inter-prediction mode, and search the reference picture in a scene number assigned to a frame inputted after the scene change, the encoding section encoding the frame inputted after the scene change in the intra-prediction mode if there is no reference picture specified by the scene number, and the encoding section encoding the frame inputted after the scene change in one of the infra-prediction mode and inter-prediction mode so as to minimize an encoding cost if there is a reference picture specified by the scene number.

This summary of the invention does not necessarily describe all necessary features so that the invention may also be a sub-combination of these described features.

The invention can be more fully understood from the following detailed description when taken in conjunction with the accompanying drawings, in which;

FIG. 1 is a block diagram depicting a moving picture encoding apparatus according to an embodiment of the present invention;
FIG. 2 is a schematic view showing an example of a moving frame encoded by the moving picture encoding apparatus shown in FIG. 1;
FIG. 3 is a block diagram depicting an example of a scene change detector circuit shown in FIG. 1; and
FIG. 4 is a flow chart showing a process of encoding a moving picture in the moving picture encoding apparatus shown in FIG. 1.

Hereinafter, a moving picture encoding apparatus according to an embodiment of the present invention will be described with reference to the accompanying drawings as required.

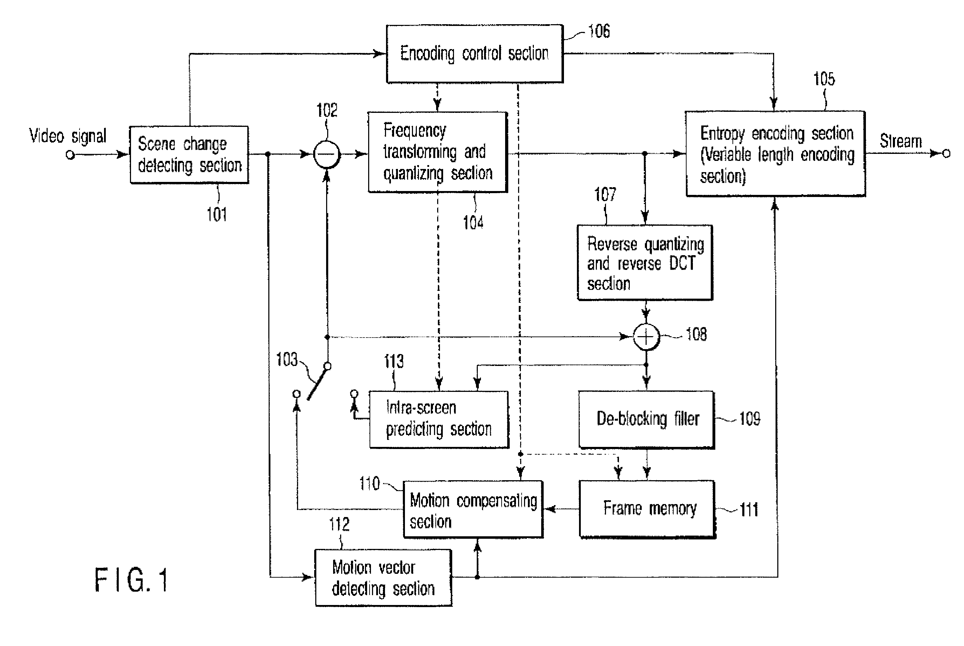

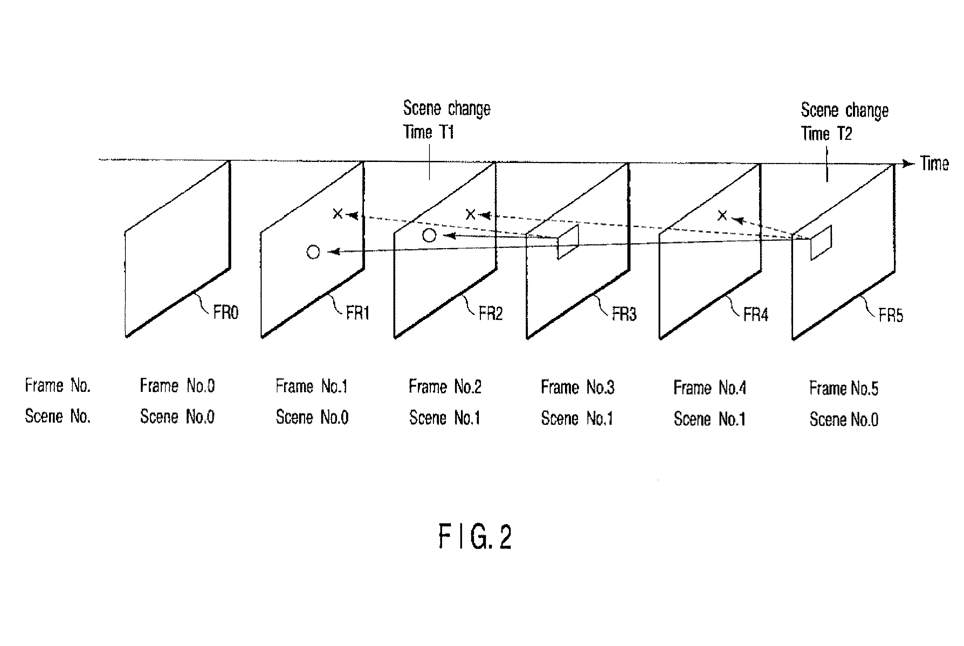

FIG. 1 is a block diagram depicting a moving picture encoding apparatus for encoding a picture signal (video signal) on a variable length by length basis in accordance with the H. 264 standard according to an embodiment of the invention. To the moving picture encoding apparatus, a picture signal (digitized video signal) including frames is inputted as shown in FIG. 2.

First, with reference to FIGS. 1 and 2, a description will be given with respect to a basic idea of the Inventor of the moving picture encoding apparatus according to the invention.

In a moving picture decoding apparatus conforming to the H. 264 standard, inter-prediction can be carried out from a plurality of reference frames. Specifically, 16 preceding and succeeding frames can be referenced when a frame is encoded. In general, an enormous amount of computation is required for motion estimation in which a target block to be referenced is determined from among all the reference frames when respective blocks constituting the frame is encoded. As shown in FIG. 2, the frames are sequentially inputted to the moving picture encoding apparatus shown in FIG. 1 and are classified into groups on a scene by scene basis. The same scene number is assigned to a frame which belongs to the same scene and the motion estimation is carried out based on the scene number.

When a scene change has occurred, and the motion of frames produced after scene change is estimated, a frame of the scene to which the reference frame immediately before the scene change belongs is excluded from reference candidates. Therefore, an amount of computation required for motion estimation can be reduced. That is, a scene number is assigned for each inputted frame, and the same scene number is assigned to the frame of the same scene, and a different scene number is assigned to the frame of a different scene. This scene number is referenced, and motion estimation is carried out in the scene or a search is made for a scene similar to the scene, whereby motion estimation is determined from the frame to which that scene belongs. The term "scene" used here denotes each scene in a moving picture. The term "scene change" used here denotes that a scene is changed. For example, in a sequence including a picture in which a flash or an identical scene is repeated such that bright and dark matters are repeated, the current scene is often returned to its original scene even if a scene change occurs.

As described above, in motion estimation (ME) utilizing a detection of a scene change, an amount of processing can be reduced by narrowing the reference frames. In this manner, in a frame in which an amount of processing can be reduced, high level motion estimation, mode selection or the like can be used.

In the moving picture encoding apparatus shown in FIG. 1, there is provided a scene change detecting section 101 for detecting a scene change at an input side thereof on the basis of the inventor's idea described above. With an elapse of time, as shown in FIG. 2, frames, for example, frames FR0 to FR5 are inputted to the scene change detecting section 101 one after another and a scene change is detected at the scene change detecting section 101. At the scene change detecting section 101, frame numbers are assigned in accordance with the input sequence of the frames FR0 to FR5, and scene numbers are assigned to be associated with frame numbers. For example, in the scene change detecting section 101, frame numbers 0 and 1 are assigned to frames FR0 and FR1 respectively, and scene number 0 indicating the fact the frames FR0 and FR1 belongs to a predetermined scene is assigned. The relation between the scene number 0 and frame numbers 0 and 1 belonging to the scene number 0 is notified to an encoding control section 106. In the case where frame FR2 that follows frame FR1 is inputted, frame number 2 is assigned to the frame FR2. The scene change detecting section 101 evaluates a correlation between frames FR1 and FR2, and determines that a scene change occurs at a predetermined time point T1 if there is no correlation between frames FR1 and FR2. Thus, the scene change detecting section 101 updates a scene number and scene number 1 is assigned to frame FR2 of frame number 2. Similarly, the relation between the scene number 1 and frame number 2 belonging to the scene number 1 is notified to an encoding control section 106. In the case where frame FR3 that follows frame FR2 is inputted, frame number 3 is assigned to the frame FR3. The scene change detecting section 101 evaluates a correlation between frames FR2 and FR3, and determines that no scene change occurs, scene number 1 is assigned to frame FR3 of frame number 3 without scene number being updated, if there is a correlation between frames FR2 and FR3. Similarly, frame number 4 and scene number 1 are assigned to frame FR4 that follows frame FR3.

The scene change detecting section 101 also repeats the evaluation and determination and assigns frame number and scene number to following frames FR4, FR5, ..., and the relation between the scene number and frame number is notified to an encoding control section 106.

As shown in FIG. 2, a scene change occurs at a predetermined time point T2 between the frames FR4 and FR5, the scene change detecting section 101 determines whether or not a scene to which frame FR5 of frame number 5 belongs exists prior to assignment of a new scene number. That is, if there is no correlation between frame FR5 and frame FR4, the frame FR5 is compared with a frame which belongs to a scene other than the scene to which the frame FR4 belongs. Here, when it is determined that there is a correlation between the frame FR5 and a frame belonging to another scene, a scene number of the scene to which that frame belongs, for example, scene number 0 is assigned. The fact that frame number 5 belongs to scene number 0 is notified to the encoding control section 106.

As described above, in the scene change detecting section 101, a frame FR of frame number n is compared with a preceding frame FR of frame number (n-1) which belongs to a predetermined scene number "m", and an occurrence of a scene change is detected based on the correlation between the frames FR of frame numbers n and (n-1). If a scene change occurs, frame FR of frame number "n" is compared with frame FR belonging to an another scene of another scene number (m-1, m-2, ..., m-k (k is integer)) without defining the frame FR of the scene number "m" as a reference candidate. If there is a predetermined correlation, the same scene is determined, and that scene number is assigned. As described later, in the case where the same scene is determined, a frame which belongs to that scene is restored as a reference frame candidate, and motion estimation is carried out.

From the scene change detector 101, frames FR0 to FR5 are supplied one after another to a frequency transforming and quantizing section 104 via a subtracting section 102. The frequency transforming and quantizing section 104 carries out a frequency transforming process and a quantizing process. That is, in the frames FR inputted to the frequency transforming and quantizing section 104, respective macro-blocks (MC) constituting each of the frames, which is a minimum unit of the frame, is quadrature-transformed to computed frequency transforming coefficient and the compute frequency transforming coefficient is quantized, under the control of the encoding control section 106. Then, the quantized frequency transforming coefficient is supplied to an entropy encoding section (variable length encoding section) 105. In the entropy encoding section (variable length encoding section) 105, the quantized frequency transforming coefficient is encoded on a variable length basis under the control of the encoding control section 106, and the encoded information is outputted as an encoded bit stream.

The quantized frequency transforming coefficient outputted from the frequency transforming and quantizing section 104 is also inputted to a reverse quantizing and frequency transforming section 107, the inputted frequency transforming coefficient is reverse quantized and reverse frequency transformed, and the resulting coefficient is supplied to an adder 108 in a macroblock unit. In the adder 108, a local decode picture signal supplied in a unit of macro-blocks is added to a prediction picture signal from a switch 103, and a local decoded signal is outputted to a de-blocking filter 109.

In the de-blocking filter 109, a distortion between blocks which occurs in the local decoded signal is filtered, and this local decoded signal is stored as a reference frame in a frame memory 111 in a unit of frames.

A frame FR outputted from the scene change detecting section 102 is supplied to a motion vector detecting section 112, and a motion vector is detected. This detected motion vector is supplied to a motion compensating section 110 and the entropy encoding section (variable length encoding section) 105. The motion compensating section 110 generates a prediction frame on the basis of a motion vector with reference to the reference frame stored in the frame memory 111, and the generated prediction frame is supplied to the subtracting section 102 via the switch 103.

In the subtracting section 102, every blocks of the newly inputted frame FR are compared with the blocks of the prediction frame from the motion compensating section 110, and differential picture data between the blocks of the frame FR and the prediction frame is calculated and is supplied to the frequency transforming and quantizing section 104. In the frequency transforming and quantizing section 104, quantizing frequency transforming coefficient is obtained from the differential picture data as described above.

The frequency transforming coefficient is outputted to the entropy encoding section (variable length encoding section) 105 from the frequency transforming and quantizing section 104 and is encoded as a payload in the entropy encoding section (variable length encoding section) 105. Then, the motion vector assigned to the entropy encoding section (variable length encoding section) 105 is also encoded, and these encoded frequency transforming coefficient and motion vector are outputted as additional information on a payload to be referenced on the decoder side.

After a scene change is detected in the scene detecting section 101 and the encoding control section 106 determines that there is no highly correlative frame FR with respect to a new scene, a new scene number is assigned to an input new frame FR pertaining to the new scene, and the switch 103 is connected to the infra-prediction section 113 to execute an intra-prediction process on the new frame FR.

In the infra-prediction process, every macro blocks in the new frame FR are compared with an intra-frame prediction macro block predicted in the picture, and difference data between the macro blocks is calculated, and is inputted to the frequency transforming and quantizing section 104. In the frequency transforming and quantizing section 104, the difference data for each macro blocks is quadrature transformed (frequency transforming-processed into a frequency transforming coefficient. In the frequency transforming and quantizing section 104, the frequency transforming coefficient is quantized, and the quantized frequency transforming coefficient is outputted from the frequency transforming and quantizing section 104. The quantized frequency transforming coefficient is supplied to the reverse quantizing and frequency transforming section 107. The quantized frequency transforming coefficient is reverse quantized and reverse frequency transformed in the reverse quantizing and frequency transforming section 107, and the thus quantized and transformed coefficient is supplied to the adder 108 in a macro block unit.

In the adder 108, the supplied coefficient is added to a prediction picture signal for respective blocks from the switch 103, the added signal is supplied as a local decoded signal to an intra-predicting section 113 via the adder 108, and a prediction picture in a block unit is generated. The generated block picture is compared with a next block picture at the subtracting section 102, the difference is supplied to the frequency transforming and quantizing section 104, and the difference data is frequency transformed and quantized. A correlation with the macro block which exists at the periphery of a macro block which is a repetition of this process is obtained, and infra-frame or infra-slice encoding is carried out.

The quantized frequency transforming coefficient is outputted to the entropy encoding section 105 from the frequency transforming and quantizing section 104, and is so encoded as to have a variable encoded length in the entropy encoding section 105, and the thus encoded frequency transforming coefficient is outputted as a payload of a bit stream.

Information on the infra-prediction process is supplied as additional information to the entropy encoding section 105 from the encoding control section 106, and the additional information is so encoded as to have a variable length. Then, the thus encoded information is outputted together with the payload.

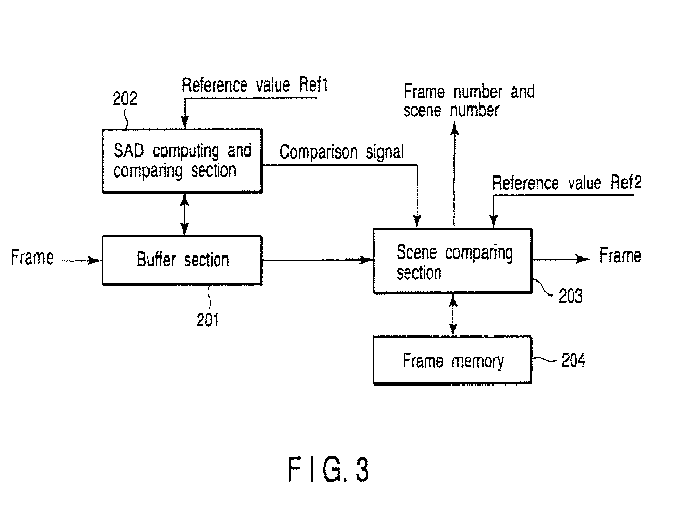

The scene change detecting section 101 shown in FIG. 1 is configured, for example as shown in FIG. 3, a scene number is generated in association with a frame number. That is, as shown in FIG. 2, frame FR0, FR1 serving as a picture signal is inputted as a video signal to the scene change detecting section 101, the frame FR0, FR1 is temporarily stored in a buffer section 201. With respect to the frame FR0, FR1, the corresponding macro blocks of both of the frames FR0 and FR1 are compared with each other by a SAD computing and comparing section, and a difference between these blocks is computed on a macro block by block basis. Then, an absolute value of that difference is added, and a sum of absolute difference (SAD) is obtained. The sum of absolute difference (SAD) is compared with a reference value Ref1. If the sum of absolute difference is larger than the reference value Ref1, it is determined that a scene change occurs. If the sum of absolute difference is smaller than the reference value Ref1, it is determined that no scene change occurs, and the same scene exists. This determination result is supplied to a scene comparing section 203 as a comparison signal from the SAD computing and comparing section 202. When the frames FR0 and FR1 are the same scene, the same scene determination signal is assigned to a scene comparing section 203, and frame FR0 is supplied to the subtracting section 102 via the scene comparing section 203. In response to an input of the frame FR0 to the subtracting section 102 from the scene comparing section 203, the scene comparing section 203 supplies information on scene number 0 and frame number 0 to the encoding control section 106. Similarly, in response to the supply of the frame FR1 to the subtracting section 102 from the scene comparing section 203, the scene comparing section 203 supplies information on scene number 0 and frame number 1 to the encoding control section 106.

After frame FR2 that follows the frame FR1 is supplied to the buffer section 201, the sum of absolute difference (SAD) is greater than reference value Ref1 as a result of macro block comparison. In this case, it is determined that a scene change is occurred between the frame FR1 and the frame FR2, and a scene change signal is assigned to the scene comparing section 203 as a comparison signal. Therefore, in the scene comparing section 203, the frame FR2 is compared one after another with the frames in the frame memory 204 in which typical frames of other scenes are stored. In this comparison, after the sum of absolute difference (SAD) from the frame compared with the frame FR2 has been obtained, if the thus obtained sum is smaller than reference value Rf2, it is determined that both of the frames belong to a similar scene. If there is no frame similar to the scene of the frame FR2 at the scene comparing section 203, a new scene number 1 is assigned to the frame FR2. These scene number 1 and frame number 2 are supplied to the encoding control section 106, and the frame FR2 of such a new scene number 1 is stored in the frame memory 204. Then, the frame FR2 is supplied from the scene comparing section 203 to the subtracting section 102.

The frame FR3, FR4 is processed as belonging to the same scene as in the frame FR2. The frame number FR3, FR4 and the scene number 1 are supplied from the scene comparing section 203 to the encoding control section 106, and the frames FR3 and FR4 are supplied to the subtracting section 102 one after another. When frame FR5 is supplied to the buffer section 201, the sum of absolute difference (SAD) becomes greater than the reference value Refl, and the scene change signal is supplied to the scene comparing section 203. In the scene comparing section 203, in the case where it is determined that the frame FR5 is similar to the frame FR1 stored in the frame memory 204, the frame FR5 is supplied to the subtracting section 102, and concurrently, the similar scene number 0 and frame number 5 are supplied to the encoding control section 106.

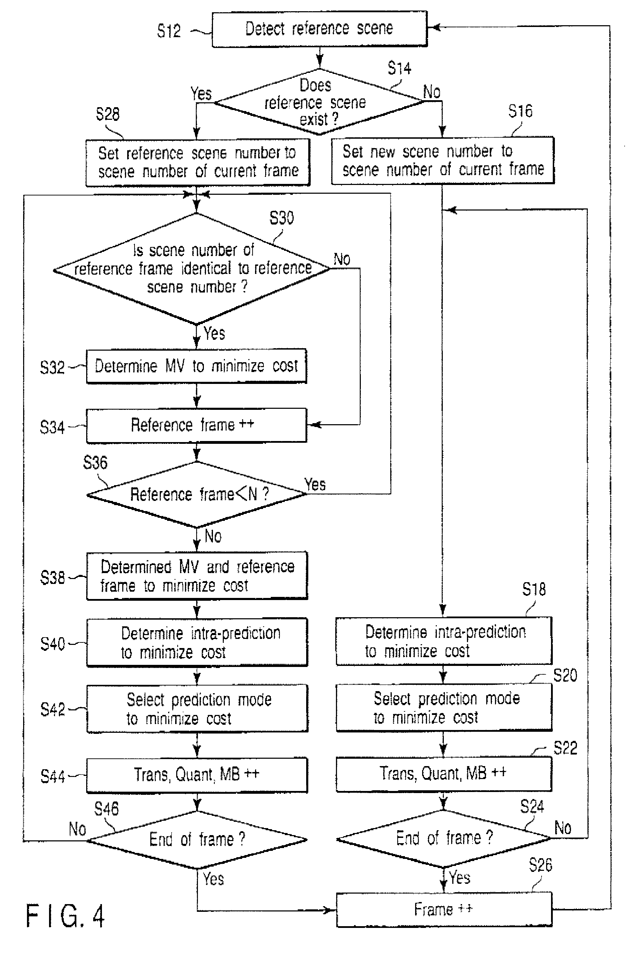

With reference to a flow chart shown in FIG. 4, a description will be given with respect to an operation of an encoding process controlled by the encoding control section 106 in the encoding apparatus shown in FIG. 1.

When frames FR1 to FR5 shown in FIG. 2 are inputted to the scene change detecting section 101 of the encoding apparatus one after another, a reference scene which is to be referred by a first input frame is searched and detected in the scene change detecting section 101 as shown in step S12 of FIG. 4. If no scene change occurs as shown in step S14, the encoding control section 106 determines that the frame FR is the same scene as a previous frame and a reference scene exists, and the current step is moved to step S28. In step S14, although a scene change occurs, if a frame of a scene to which the frame FR belongs is stored in the frame memory 204, it is assumed that a reference scene exists similarly, and the current step is moved to step S28. In step S14, in the case where a scene change occurs, and moreover, a similar scene targeted for reference does not exist in the frame memory 204 shown in FIG. 3, the current step is moved to step S16.

In step S16, the encoding control section 106 sets a new scene number for the frame to be encoded. In addition, as shown in step S18, a prediction mode in the intra-prediction is determined for respective blocks divided from the frame so as to minimize cost for each blocks with referring to a relation between the prediction errors in the infra-prediction section 113 and generated encoding amount in the entropy encoding section 105.

The term "cost" used here is defined by a cost function. In general, the following formula is used by a parameter for determining an encoding mode:

$$\text{Cost function} = D + \lambda' \cdot R$$

wherein D denotes a distortion; a sum of absolute difference (SAD) or a sum of square difference (SSD) is used. SSD is obtained by squaring a respective one of prediction errors and computing a sum thereof. $\lambda$ denotes a constant (Lagrangian multiple), and R denotes a rate defined by a generated encoding amount of bits for encoding a target block with utilizing a candidate mode, which corresponds to generated bits of the intra-prediction mode encoding in the intra-prediction and generated encoding amount of encoding the motion vector and the reference frame in the inter-prediction. The above cost is computed with respect to each prediction modes, and a combination of the prediction modes which minimizes a cost is handled as an optimal parameter value.

Next, as shown in step S20, the inter-prediction mode is not selected because the encoding control section 106 determines that there is no reference frame in the step S14, and the intra-prediction mode determined in the step S18 is selected as the prediction mode for minimizing the cost.

In step S22, a block is encoded in the prediction mode selected in step S20. That is, frequency transforming and quantizing are executed, and a frequency transforming coefficient of the macro block is obtained in the frequency transforming and quantizing section 104. Thereafter, in step S24, it is verified whether or not encoding process has terminated with respect to all the blocks of a frame FR to be encoded in the encoding control section 106. If the encoding process does not terminate, the current step is returned to step S18. When the encoding process has terminated with respect to all the blocks of the frame FR, the current step is advanced to step S26. Then, the current step is returned to step S12 for processing of a next frame FR.

In step S14, if no scene change occurs and the frame FR has a same scene as that of a previous frame, the encoding control section 106 determines that a reference scene exists, and the current step is moved to step S28. Alternatively, if a scene change occurs, but there is a reference frame in a frame memory 204 of the scene change detecting section 101, which belongs to a same scene as that of the frame FR inputted after the scene change, the encoding control section 106 also determines that a reference scene exists, and the current step is moved to step S28. As shown in step 528, a scene number to be referenced to the frame FR is set. Next, in step S30, it is verified whether or not a scene number of a frame FR stored in the frame memory 11 and having a frame number "n" assigned thereto, is identical to that set in the frame FR. If they are not identical in scene, the current frame is changed to a new frame, as shown in step S34. If this selected frame FR is stored in the frame memory 111, and does not exceed N, the current step is returned to step S30 again in which it is verified whether or not the scene of the selected frame FR is identical to a frame of a current frame FR.

If the scene of the selected frame FR is identical to the frame of the current frame FR in the encoding control section 106 in step S30, a motion vector (MV) for minimizing a cost is determined in the motion vector detecting section 106 in step S32, This cost is calculated from the prediction error in the motion compensating section 110 and a generated encoding amount of the reference frame and motion vector (MV) in the entropy encoding section. The frame number of this reference frame and the determined motion vector (MV) are temporarily stored for later comparison in the encoding control section 106. In step 534, the current frame is changed to a new frame. If this selected frame FR is stored in the frame memory 111, and does not exceed N, the current step is returned to step S30 again in which it is verified whether or not the scene of the selected frame FR is identical to the frame of the current frame FR. If a frame FR of the same scene exists, that frame is defined as a reference frame, and then, a motion vector (MV) for minimizing a cost is decided in the motion vector detecting section 112. In the case where there exist a plurality of frames whose scene numbers are identical to each other, the frame numbers of a plurality of reference frames and a plurality of decided motion vectors (MV) are temporarily stored together with the cost in step S32.

In step S36, when a search of the same scene has been terminated with respect to N reference frames, the plurality of temporarily stored costs are compared with each other. Then, as shown in step 538, a reference frame whose cost is minimum and a motion vector (MV) are decided. Therefore, the reference frame and motion vector (MV) for inter-prediction are decided.

Next, in step S40, infra-prediction for minimizing a cost is decided for the sake of comparison. In step S42, the inter-prediction cost decided in step S40 is compared with the intra-prediction cost decided in step S42, and a prediction mode for minimizing the cost is selected. In the case where intra-prediction has been decided, the switch 103 shown in FIG. 1 is changed to the side of the intra-screen predicting section 113. When inter-prediction is decided, the switch 103 shown in FIG. 1 is changed to the motion compensating section 110.

In step S44, the block is encoded in the prediction mode selected in step S42. That is, frequency transforming transform and quantizing are executed in the frequency transforming and quantizing section 104, and a frequency transforming coefficient of the macro-block is obtained. Thereafter, in step S46, it is verified an encoding process is terminated with respect to all the macro-blocks of frames FR to be encoded. If the verification result is negative, the current step is returned to step S30. If the encoding process is terminated with respect to all the macro-blocks of the frames FR, the current step is advanced to step S26. Then, the current step is returned to step S12 for the sake of processing of a next frame FR.

As has been described above, in motion estimation (ME) after scene change detection, an amount of processing can be reduced by narrowing reference frames. In this manner, in a frame in which the amount of processing is reduced, high level motion estimation or mode selection can be used.

In a moving picture encoding apparatus (encoder) for carrying out motion estimation with respect to N reference frames having a search range R x R, the maximum number of reference pixels is obtained as $R \times R \times N$, and the search range in encoding of one frame is obtained as "r = sqrt" ($R \times R \times N/n$), wherein "n" is the number of references (n < = N) to be actually subjected to motion estimation.

In a two-pass encoding process, in the case where a periodicity between frames exists, a frame before scene change is stored as Non-IDR (Non Instantaneous Decoding Refresh) picture in a frame memory. If no periodicity exists, it is preferable that an IDR frame is stored. In accordance with this process, the efficiency of encoding can be improved.

As has been described above, according to the present invention, there is provided a moving picture encoding apparatus capable of reducing an amount of processing relating to motion estimation in a frame after scene change.

## Claims

1. A moving picture encoding apparatus for encoding a moving picture **characterized by** comprising:

   a scene change detecting section (101) configured to compare successive frames (FR0, ..., FR5) of the moving picture to detect a scene change, and assigns a scene identifier (scene No. 0, No. 1) for identifying an identical or similar scene to each frame (FR0, ..., FR5) in response to detection of the scene change;
   a storage section (204) configured to store the frame (FR0, ..., FR5) which belongs to said each scene as a reference frame (FR0, ..., FR5) specified by the scene identifier (scene No. 0, No. 1);
   a setting section (106) configured to set any one of an intra-prediction mode and an inter-prediction mode; and
   an encoding section (102, ..., 113) configured to encode the frame (FR0, ..., FR5) inputted between the scene changes in the inter-prediction mode and to search a reference frame (FR0, ..., FR5) by a scene identifier (scene No. 0, No. 1) inputted after the scene change, the encoding section (102, ..., 113) encoding the frame (FR0, ..., FR5) inputted after the scene change in the infra-prediction mode if there is no reference picture specified by the scene identifier (scene No. 0, No- 1), and encoding section (102, ..., 113) encoding the frame (FR0, ..., FR5) inputted after the scene change in one of the inter-prediction mode and infra-prediction mode inputted so as to minimize an encoding cost if there is a reference picture specified by the scene identifier (scene No. 0, No.1).

2.  A moving picture encoding apparatus according to claim 1, **characterized in that** the scene change detecting section (101) comprises:

    a correction comparing section (201, 202) configured to detect a scene change from a correlation between continuously inputted frames (FR0, ..., FR5) to generate a comparison signal;
    a memory (204) configured to store the frame (FR0, ..., FR5), as a comparison, which belongs to the scene specified by the identifier (scene No. 0, No. 1);
    a scene comparing section (203) configured to compare the comparison picture stored in the memory (204) with the frame (FR0, ..., FR5) after the scene change to provide a scene identifier (scene No. 0, No. 1) to the frame (FR0, ... , FR5).

3.  A moving picture encoding apparatus according to claim 1, **characterized in that** the scene change detecting section (101) provides a frame number (Frame No. 1, ..., No. 5) in accordance with a sequence of frames (FR0, ..., FR5) to be inputted, and the scene identifier (scene No. 0, No. 1) is provided for each frame number (Frame No. 1, ..., No. 5).

4.  A moving picture encoding apparatus according to claim 1, **characterized in that** the encoding section (102, ..., 113) includes:

    a converting section (102, 104) configured to encode a difference between a prediction picture and the frame (FR0, ..., FR5) in unit of block or blocks to output encoded data;
    a reverse converting section (107) configured to reverse-convert the encoded data to the reference picture by referring to the prediction picture;
    a motion vector detecting section (112) configured to detect a motion vector of the inputted frame (FR0, ..., FR5) ; and
    a motion compensating section (110) configured to motion-compensate the reference picture reverse-converted by referring to the reference picture and the motion vector to generate the prediction picture.

5.  A moving picture encoding apparatus according to claim 1, **characterized in that** the storage section (204) is configured to store a picture outputted from the reverse converting section (107) as the reference picture.

6.  A moving picture encoding apparatus for encoding a moving picture **characterized by** comprising:

a scene change detecting section (101) configured to compare successive frames (FR0, ..., FR5) of the moving picture to detect a scene change, which have frame numbers (Frame No. 1, ..., No. 5) and are inputted in time series, and assign a scene number (scene No. 0, No. 1) for identifying an identical or similar scene to each frame (FR0, ..., FR5) in response to detection of the scene change, wherein the scene change detecting section (101) assigns a scene number (scene No. 0, No. 1) identical to the scene if an identical or similar scene exists in a predetermined range before the scene change, and the scene change detecting section (101) assigns a new scene number (scene No. 0, No. 1) if no identical or similar scene exists in a predetermined range before the scene change;
a storage section (204) configured to store a frame (FR0, ..., FR5) which belongs to said each scene as a reference frame (FR0, ... , FR5) specified by the scene number (scene No. 0, No. 1) and frame number (Frame No. 1, ..., No. 5);
a setting section (106) configured to set any one of an intra-prediction mode and an inter-prediction mode; and
an encoding section (102, ..., 113) configured to encode frames (FR0, ..., FR5) to which the identical scene numbers (scene No. 0, No. 1) are assigned, the frames (FR0, .., FR5) being continuously inputted, in the inter-prediction mode, and search the reference picture in a scene number (scene No. 0, No. 1) assigned to a frame (FR0, ..., FR5) inputted after the scene change, the encoding section (102, ..., 113) encoding the frame (FR0, ..., FR5) inputted after the scene change in the intra-prediction mode if there is no reference picture specified by the scene number, and the encoding section (102, ..., 113) encoding the frame (FR0, ..., FR5) inputted after the scene change in one of the infra-prediction mode and inter-prediction mode so as to minimize an encoding cost if there is a reference picture specified by the scene number (scene No. 0, No. 1).

7.  A moving picture encoding apparatus according to claim 6, **characterized in that** the scene change detecting section (101) comprises:

    a correlation comparing section (201, 202) configured to compare a correlation between continuously inputted frames (FR0, ..., FR5) with a threshold value, and, when the correlation is equal to or smaller than the threshold value, generates a scene change signal as detection of the scene change;
    a memory (204) configured to store a frame (FR0, ..., FR5) , as a comparison picture, which belongs to the scene specified by the scene number (scene No. 0, No. 1); and

a scene comparing section (203) configured to compare the comparison picture stored in the memory (204) with the frame (FR0, ..., FR5) after the scene change, and assign a scene number (scene No. 0, No. 1) identical to the comparison picture, if the picture and frame (FR0, ..., FR5) are identical to or similar to each other,.

8. A moving picture encoding apparatus according to claim 6, **characterized in that** the encoding section (102, ..., 113) includes:

a converting section (102, 104) configured to encode a difference between a prediction picture and the frame (FR0, ..., FR5) in units of macro-blocks to output encoded data;
a reverse converting section (107) configured to reverse-convert the encoded data to the reference picture by referring to the prediction picture;
a motion vector detecting section (112) configured to detect a motion vector of the inputted frame (FR0, ..., FR5); and
a motion compensating section (110) configured to motion-compensate the reference picture reverse-converted by referring to the reference picture and the motion vector to generate the prediction picture.

9. A moving picture encoding apparatus according to claim 6, **characterized in that** the storage section (204) stores a picture outputted from the reverse converting section (107) as the reference picture.

FIG. 1

Scene change
Time T1

Scene change
Time T2

Time

FR0

FR1

FR2

FR3

FR4

FR5

| Frame No. | Frame No.0 | Frame No.1 | Frame No.2 | Frame No.3 | Frame No.4 | Frame No.5 |
| Scene No. | Scene No.0 | Scene No.0 | Scene No.1 | Scene No.1 | Scene No.1 | Scene No.0 |

F I G. 2

Reference value Ref1

202

SAD computing and comparing section

Comparison signal

Frame number and scene number

Reference value Ref2

Frame ──→ Buffer section ──→ Scene comparing section ──▶ Frame

201

203

Frame memory ── 204

FIG. 3

S12 — Detect reference scene

S14 — Does reference scene exist ?

Yes → S28 — Set reference scene number to scene number of current frame

No → S16 — Set new scene number to scene number of current frame

S30 — Is scene number of reference frame identical to reference scene number ?

No →

Yes ↓

S32 — Determine MV to minimize cost

S34 — Reference frame ++

S36 — Reference frame < N ?

Yes →

No ↓

S38 — Determined MV and reference frame to minimize cost

S40 — Determine intra-prediction to minimize cost

S42 — Select prediction mode to minimize cost

S44 — Trans, Quant, MB ++

S46 — End of frame ?

No

Yes

S18 — Determine intra-prediction to minimize cost

S20 — Select prediction mode to minimize cost

S22 — Trans, Quant, MB ++

S24 — End of frame ?

No

Yes

S26 — Frame ++

FIG. 4

**REFERENCES CITED IN THE DESCRIPTION**

**Non-patent literature cited in the description**

- **THOMAS WIEGAND.** Overview of the H. 264/AVC Video Coding Standard. *IEEE TRANSACTION ON CIRCUIT AND SYSTEMS FOR VIDEO TECHNOLOGY,* 2003, vol. 13 (7